# FASCICULE DE BREVET EUROPEEN

(11) **EP 1 332 393 B1**
(45) Date de publication et mention de la délivrance du brevet: **05.01.2005**
(21) Numéro de dépôt: 01978524.5
(22) Date de dépôt: 10.10.2001
(51) Int. Cl.: G02B 6/42

(54) **PROCEDE ET DISPOSITIF D'ALIGNEMENT PASSIF DE GUIDES DE LUMIERE E T DE COMPOSANTS OPTOELECTRONIQUES ET SYSTEME OPTIQUE UTILISANT CE DISPOSITIF**
VERFAHREN UND VORRICHTUNG ZUR PASSIVEN JUSTIERUNG VON LICHTWELLENLEITERN UND OPTOELEKTRONISCHEN KOMPONENTEN SOWIE DIESE VORRICHTUNG VERWENDENDES OPTISCHES SYSTEM
METHOD AND DEVICE FOR PASSIVE ALIGNMENT OF OPTICAL WAVEGUIDES AND OPTOELECTRONIC COMPONENTS AND OPTICAL SYSTEM USING SAID DEVICE

(30) Priorité: 11.10.2000 FR 0012993
(43) Date de publication de la demande: 06.08.2003
(73) Titulaire: COMMISSARIAT A L'ENERGIE ATOMIQUE, 75752 Paris Cédex 15 (FR)
(72) Inventeur: MARION, François, F-38120 SAINT-EGREVE (FR); JALAGUIER, Eric, 38240 SAINT-MARTIN-D'URIAGE (FR); SOURIAU, Jean-Charles, F-38120 SAINT EGREVE (FR)
(74) Mandataire: Poulin, Gérard
(86) Numéro de dépôt international: PCT/FR2001/003125
(87) Numéro de publication internationale: WO 2002/031565

(56) Documents cités:
- EP-A- 0 550 973
- US-A- 4 217 598
- US-A- 4 309 670
- US-A- 4 830 450
- US-A- 5 305 407
- US-A- 5 434 939

## Description

### DOMAINE TECHNIQUE

La présente invention concerne un procédé d'alignement optique ainsi qu'un système optique comprenant an moins un guide de lumière et un composant optoélectronique.

Le composant peut être un photo-détecteur ou un photo-émetteur (par exemple du genre diode ou laser).

L'invention permet en particulier d'assembler un ruban standard de fibres optiques et une barrette de circuits optiques émetteurs ou récepteurs.

L'invention s'applique aussi à la connexion d'une matrice de fibres optiques à une matrice de VCSEL c'est-à-dire de lasers à émission par la surface et à cavité verticale (« vertical cavity surface emitting lasers ») ou à une matrice de photo-détecteurs de ce genre.

L'invention s'applique en outre aux composants optoélectroniques que l'on veut assembler à des liens optiques à fort débit (par exemple des câbles optiques munis de connecteurs) ainsi qu'à l'assemblage de fibres optiques « parallèles » et de composants optoélectroniques juxtaposés.

### ETAT DE LA TECHNIQUE ANTERIEURE

Le couplage d'une fibre optique et d'un émetteur de faisceau laser nécessite un alignement précis de ce composant et de la fibre, en général un alignement à au plus 10 µm près, la précision requise étant même supérieure pour les fibres optiques monomodes. Pour le couplage d'une fibre optique et d'un composant détecteur (par exemple un VCSEL traité en photodétecteur) on demande la même précision que pour le couplage entre la fibre et le composant émetteur.

Si l'on considère l'exemple du couplage d'une fibre optique et d'un émetteur laser, une technique d'alignement communément utilisée est l'alignement actif de la fibre et de cet émetteur laser, ce dernier étant mis sous tension pour émettre un faisceau laser. Lorsque l'alignement est obtenu, on fixe la fibre à l'émetteur laser par soudage ou collage.

Cette technique d'alignement actif conduit à un coût élevé pour l'assemblage obtenu.

C'est pourquoi une technique d'alignement passif a été étudiée. Dans ce cas, le positionnement relatif puis la fixation de la fibre et de l'élément émetteur ou récepteur sont réalisés sans tension (pour l'élément) ni flux lumineux. La fibre et l'élément sont calés mécaniquement l'un par rapport à l'autre puis fixés de façon précise.

On connaît par exemple une technique d'assemblage passif d'une fibre optique et un barreau laser (« laser rod ») dont l'émission est latérale. Cet assemblage utilise un support comprenant un sillon en V (« V groove ») qui est prévu pour le positionnement de la fibre optique. Cette dernière est collée dans ce sillon en V et le barreau laser est hybridé avec précision sur le support, en regard de la fibre.

Cette technique permet d'atteindre des précisions de l'ordre de 1 µm à 5 µm. Elle permet d'assembler une fibre optique et un laser à émission latérale mais ne permet pas l'assemblage d'une fibre et d'un laser du genre VCSEL qui émet de la lumière par une face.

Cependant, cette technique a été modifié pour permettre un tel assemblage. Dans ce cas, on utilise des moyens optiques ou mécaniques pour mettre le VCSEL à 90° de la fibre optique.

Néanmoins, cette technique modifiée d'alignement passif nécessite la mise en oeuvre de moyens complexes, en particulier de moyens auxiliaires d'alignement.

En fait, si l'on désire assembler une barrette de VCSEL (émetteurs ou détecteurs) à des fibres optiques, l'art antérieur montre qu'il est nécessaire d'utiliser un moyen auxiliaire d'alignement et de support pour l'assemblage.

Un assemblage « direct » d'un VCSEL émettant par la face arrière et d'une fibre optique est cependant connu par les documents suivants :
[1] A. Keating et al., 6 Gbit/s optically pumped 1,55 µm VCSEL operating up to 105°C, Revue Photonics, vol.12, n°2, 2000, pp. 116-118.
[2] Y. Kobayashi et al., Improvement of coupling efficiency for passive alignment of stacked multifiber tapes to a vertical-cavity surface-emitting laser array, Jpn. J. Appl., Phys., vol.36, Part I, n°3B, 1997, pp. 1872-1875.

On obtient cet assemblage connu en formant un trou de guidage dans le substrat VCSEL.

Dans l'invention, comme dans l'art antérieur, on cherche à résoudre le problème du couplage direct et précis entre au moins un guide de lumière (par exemple une fibre optique) et un composant optoélectronique (émetteur ou détecteur), par exemple du genre « planar » actif, ce couplage étant passif c'est-à-dire réalisé en l'absence de fonctionnement du composant.

Pour plus de clarté, considérons le problème particulier que pose l'assemblage direct et précis d'un VCSEL et d'une fibre optique.

Le document [1] montre comment on peut aligner des fibres optiques et des dispositifs optoélectroniques (VCSEL) en perçant des trous de guidage dans le substrat qui porte les dispositifs et en glissant des fibres optiques dans ces trous.

L'ensemble ainsi obtenu permet d'aligner passivement les fibres et les dispositifs optoélectroniques.

Cette technique connue présente cependant l'inconvénient de nécessiter la formation de trous de guidage directement dans le substrat où l'on fait croître ces dispositifs.

Or, il s'agit d'un substrat fait de GaAs et donc fragile, qui risque de se casser en cours de fabrication des dispositifs s'il est percé au préalable, ou qui risque de se casser lors des opérations finales de fabrication de l'ensemble si ce substrat est percé après la formation des dispositifs.

De plus, ce substrat en GaAs, fragilisé par les trous, est susceptible de se casser lors de l'introduction des fibres optiques.

En outre, le perçage à des cotes précises d'un matériau tel que GaAs est une technique peu connue et donc difficile à mettre en oeuvre.

### EXPOSÉ DE L'INVENTION

La présente invention a pour but de remédier aux inconvénients précédents.

Elle propose de ne plus percer directement le substrat de croissance mais de rapporter ce substrat sur un support et de former des trous dans ce support.

On fabrique de préférence ce support à partir d'un matériau solide, capable de résister à la formation des trous.

De façon précise, la présente invention a pour objet un procédé d'alignement passif d'un composant optoélectronique et d'au moins un guide de lumière (par exemple une fibre optique) selon la revendication 1.

La présente intention concerne aussi un système optique selon la revendication 7.

On peut par exemple utiliser un guide de lumière suffisamment court pour permettre aux supports appartenant respectivement aux premier et deuxième dispositifs d'être sensiblement en contact l'un avec l'autre.

Ce guide de lumière peut être une fibre optique ou une lentille.

### BRÈVE DESCRIPTION DES DESSINS

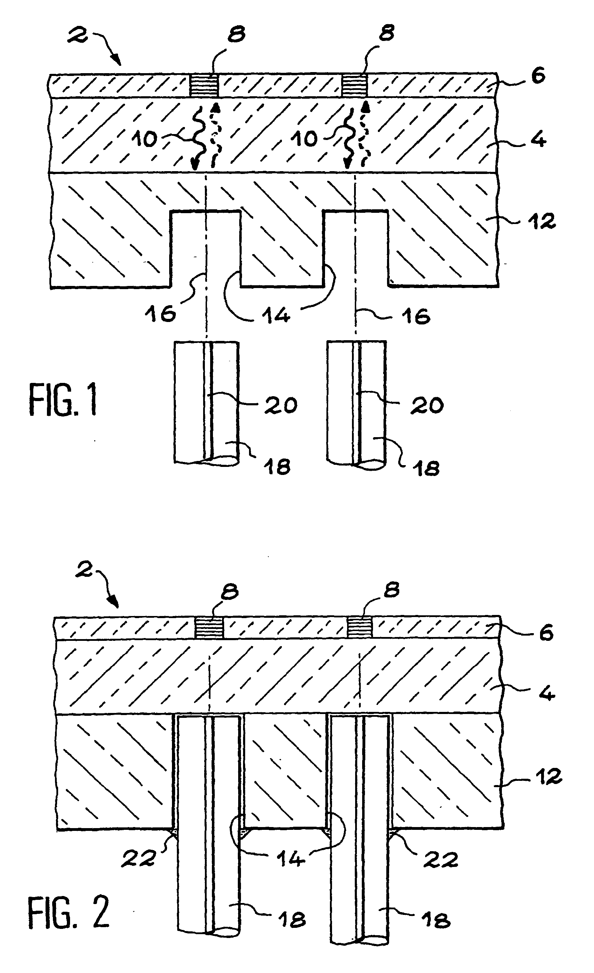

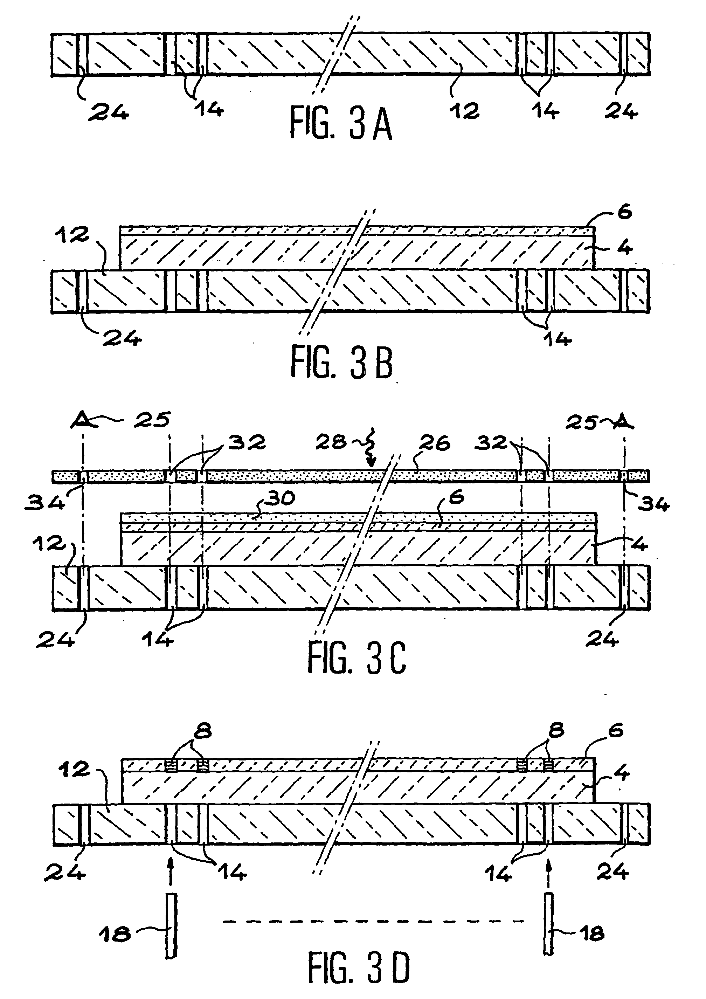

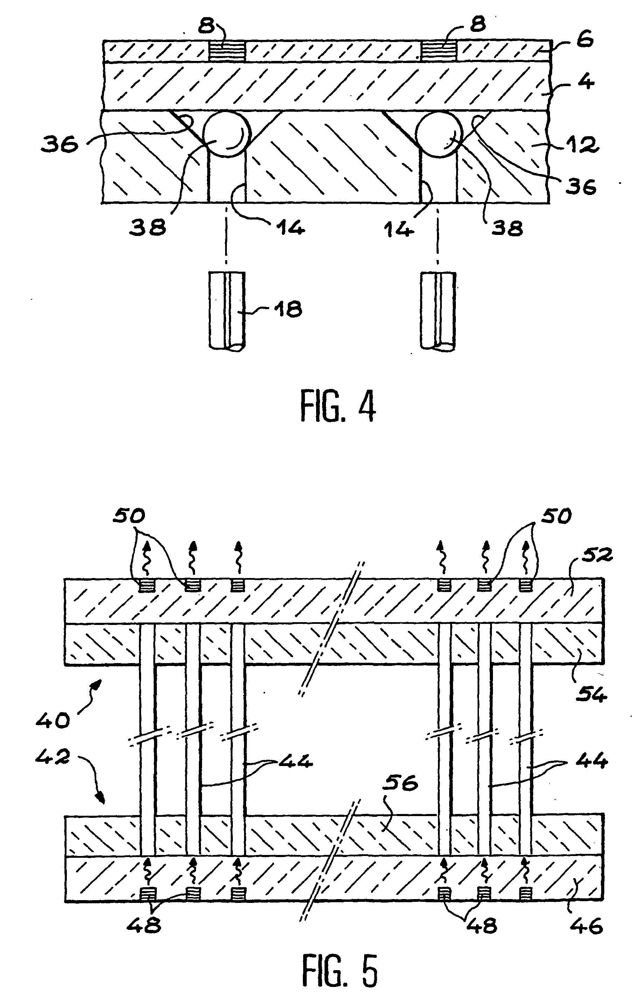

La présente invention sera mieux comprise à la lecture de la description d'exemples de réalisation donnés ci-après, à titre purement indicatif et nullement limitatif, en faisant référence aux dessins annexés sur lesquels :
■ les figures 1 et 2 sont des vues en coupe schématiques de modes de réalisation particuliers du dispositif objet de l'invention,
■ les figures 3A à 3D illustrent schématiquement des étapes d'un mode de mise en oeuvre particulier du procédé objet de l'invention,
■ la figure 4 est une vue en coupe schématique d'un autre mode de réalisation particulier du dispositif objet de l'invention, et
■ les figures 5 à 7 sont des vues schématiques de modes de réalisation particuliers du système optique objet de l'invention.

### EXPOSÉ DÉTAILLÉ DE MODES DE RÉALISATION PARTICULIERS

Le dispositif conforme à l'invention, qui est schématiquement représenté sur la figure 1, comprend un composant optoélectronique 2. Ce composant comporte un substrat 4, par exemple en GaAs, qui constitue un substrat de croissance : on a fait croître sur ce substrat une couche épitaxiale 6 dans laquelle on a formé une ou plusieurs zones actives, telles que les zones actives 8, destinées à émettre ou à détecter des faisceaux lumineux 10. Le substrat 4 est transparent à ces faisceaux 10.

Le composant optoélectronique 2 peut avoir l'épaisseur nominale qu'il avait lors de la croissance de la couche épitaxiale 6 et de la formation des zones actives 8 ou peut être aminci jusqu'à une épaisseur choisie (inférieure à l'épaisseur nominale).

Le composant 2 émet de la lumière vers la face opposée à celle à partir de laquelle on a formé les zones actives 8 ou détecte de la lumière provenant de cette face opposée.

Le dispositif de la figure 1 comprend aussi un support 12 également appelé support mécanique, dont une face est fixée à cette face opposée. Des trous 14 sont formés dans ce support 12 à partir de l'autre face de celui-ci. Ces trous sont respectivement formés en regard des zones actives 8 : l'axe 16 de chaque trou rencontre la zone active qui lui correspond.

Chaque trou est destiné à recevoir l'extrémité d'une fibre optique 18 dont le coeur (« core ») a la référence 20 sur la figure 1. Cette fibre est destinée à être couplée à la zone active 8 correspondant au trou dans lequel on introduit cette fibre. Le diamètre de cette fibre est très légèrement inférieur au diamètre de ce trou.

Dans l'exemple de la figure 1, chaque trou 14 est borgne : il ne débouche pas sur la face du support à laquelle est fixé le composant optoélectronique 2. Dans ce cas, on choisit un support en un matériau transparent à la lumière émise par les zones actives 8 ou détectée par ces zones.

Dans l'exemple de la figure 2, au contraire, les trous 14 sont des perçages : ils débouchent sur la face du support 12 qui est fixée au composant 2. On a représenté sur cette figure 2 les fibres 18 logées dans les trous correspondants 14.

Une couche de colle 22 disposée à la périphérie de chaque fibre permet de maintenir l'extrémité de cette fibre dans le trou correspondant 14.

Dans les exemples des figures 1 et 2, on voit simplement deux fibres optiques adjacentes mais on pourrait en prévoir beaucoup plus, formant un réseau (« array ») linéaire (respectivement bidimensionnel) de fibres optiques, destiné à être couplé à un réseau linéaire (respectivement bidimensionnel) de zones actives, formé sur le composant 2.

On verra plus loin comment obtenir aisément les alignements entre les fibres optiques et les zones actives.

Les dispositifs des figures 1 et 2, formés comme on l'a expliqué, sont extrêmement solides si le matériau du support 12 est choisi de manière adéquate, par exemple en corindon ou en silicium. Il est préférable de choisir un matériau qui est en outre facile à travailler et il convient de noter que le silicium a cette qualité.

La solidité de l'assemblage composant-support mécanique et la facilité de perçage de ce support avec la précision demandée (généralement ±1 µm) ou les formes demandées (par exemple cylindriques ou coniques) constituent deux avantages de la présente invention.

En ce qui concerne la solidité de l'assemblage, indiquons que cet assemblage peut être formé avant ou, au contraire, après la formation des zones actives 8.

Pour former cet assemblage avant ces zones actives, on peut placer le substrat 4 du composant optoélectronique 2 sur le support mécanique 12 avant de former les zones actives 8. L'assemblage ainsi constitué permet d'avoir une grande solidité du substrat 4 pendant la formation des zones 8 et d'éviter tout problème de casse, qui se pose avec les substrats de croissance standard par exemple en GaAs ou en InP.

Pour former l'assemblage après les zones actives 8, on peut placer le substrat 4 (généralement en forme de plaque) sur le support mécanique 12 après avoir formé les zones 8. L'assemblage ainsi constitué permet d'avoir une grande solidité pendant les opérations de montage, telles que le report de l'assemblage sur une plaque de céramique et la mise en place des fibres optiques.

En ce qui concerne la facilité du perçage du support mécanique, considérons l'exemple d'un support en silicium.

Il est connu que ce matériau est utilisé pour réaliser des assemblages de MEMS ou systèmes micro-électro-mécaniques (« micro-electro-mechanical systems »). Le perçage du silicium est donc parfaitement maîtrisé et il existe de nombreuses techniques et machines qui permettent d'obtenir une plaque formant le support mécanique tel qu'on l'a défini.

On peut en outre former, dans le silicium, des éléments complémentaires (par exemple des lentilles de collimation au fond des trous de guidage 14), susceptibles de donner à ce matériau. un rôle optoélectronique actif.

Les figures 3A à 3D illustrent schématiquement des étapes d'un mode de réalisation particulier de l'invention, dans lequel on colle, avant la formation des zones actives 8 (émettrices ou réceptrices), la plaque de silicium 12, comportant des trous 14 traversant cette plaque 12, au composant optoélectronique 2.

La figure 3A montre la plaque de silicium 12, dans laquelle on a percé les trous 14, ou empreintes de fibres, par exemple par gravure chimique ou gravure par plasma ou usinage mécanique. On a également formé par l'une de ces techniques, dans cette plaque 12, de part et d'autre de l'ensemble des trous 14, des repères ou marques d'alignement 24, par exemple constitués par des perçages identiques aux trous traversants 14.

Il convient de noter que l'on pourrait aussi utiliser de tels perçages 24 comme repères avec des trous 14 borgnes.

La figure 3B illustre le report et le collage du substrat 4, par exemple en GaAs (et muni de la couche épitaxiale 6), sur la plaque percée de silicium 12, formant le support mécanique.

Le collage est par exemple un collage moléculaire ou un collage eutectique ou un collage réalisé au moyen d'une couche adhésive appropriée (non représentée).

La figure 3C illustre schématiquement la réalisation d'un premier niveau d'alignement: on aligne (ce que l'on a symbolisé par les yeux 25) un masque de photolithographie 26 sur les marques 24 (formées à l'extérieur de la zone de collage du substrat 4 au support 12).

On réalise ensuite (en utilisant un rayonnement ultraviolet 28 et une couche de résine photosensible (« photoresist layer ») 30 préalablement formée sur le substrat 4) une photolithographie qui permet donc d'aligner le premier niveau avec les trous ou empreintes de fibres 14 sous-jacentes.

La photolithographie permet la formation des zones actives 8 (figure 3D) en regard des trous 14. Le masque 26 comprend des motifs 32, correspondant respectivement aux zones actives 8 à former, ainsi que des motifs 34, tels qu'en alignant ces motifs 34 avec les repères 24, les motifs 32 du masque soient respectivement alignés avec les trous 14 du support 12.

La figure 3D illustre schématiquement l'alignement des zones actives 8, que l'on a formées, sur le premier niveau d'alignement. Les motifs émetteurs ou récepteurs que constituent ces zones sont ainsi alignés avec une très bonne précision par rapport aux empreintes de fibres 14 (à moins de 1 µm près).

On peut alors mettre en place les extrémités des fibres optiques 18 dans les trous correspondants 14.

Diverses variantes du mode de réalisation particulier, que l'on vient de décrire en faisant référence aux figures 3A à 3D, sont possibles.

Dans le cas considéré du report du substrat 4 sur le support 12 avant la formation des zones 8 sur ce substrat, on peut par exemple amincir le substrat 4 avant son report et le coller au support 12 par une adhésion moléculaire.

On peut aussi former des éléments complémentaires sur le silicium avant le collage du substrat 4 au support 12.

Cette possibilité est schématiquement illustrée sur la figure 4 où l'on voit que l'on a donné une forme conique 36 à l'extrémité de chaque trou 14 débouchant sur la face du support, face qui est collée au substrat 4, et que l'on a placé, dans le cône ainsi obtenu, une lentille sphérique de collimation 38, ou lentille de fond d'empreinte, dont le diamètre est choisi pour que cette lentille soit tangente au substrat 4 lorsque ce dernier est fixé au support 12.

Cela ne serait pas possible dans le cas d'un perçage direct du substrat de croissance en GaAs.

Le report du substrat 4 sur le support 12 après avoir formé les zones actives 8 est possible en mettant en oeuvre des techniques à basse température, telles que le collage et la soudure, avec des machines permettant un alignement et un collage simultanés.

On peut envisager la réalisation de zones actives sur la face arrière du composant optoélectronique et sur la face avant de la plaque formant le support mécanique puis un assemblage par des billes de brasure (« solder balls ») selon la technique de retournement de puce (« flip-chip »).

De nombreuses applications de l'invention sont possibles : cette invention permet de fabriquer des connecteurs optiques à fibre unique, des connecteurs optiques matriciels ou à ruban de fibres et des liaisons optiques directes entre des émetteurs lasers et d'autres émetteurs lasers permettant le pompage optique des précédents.

L'invention permet aussi l'assemblage tridimensionnel de plaques optiques et le couplage de ces plaques par des fibres optiques.

Cette possibilité est schématiquement illustrée par le système optique de la figure 5, comprenant un premier dispositif 40 et un deuxième dispositif 42 qui sont du genre de celui de la figure 2 et couplés l'un à l'autre par un ensemble de fibres optiques 44.

Le dispositif 42 constitue le dispositif inférieur et comprend un substrat 46 où l'on a formé des zones actives 48 constituant des VCSEL ou lasers à émission par la surface à cavité verticale (« vertical cavity surface emitting lasers »).

Ces VCSEL fonctionnent à 980 nm et émettent vers le haut des flux lumineux qui passent dans les fibres 44. Ces fibres transmettent ces flux vers les zones actives 50 du dispositif supérieur 40, formées dans un substrat 52. Ces zones sont des lasers qui sont excités par ces flux incidents à 980 nm et qui émettent à 1550 nm vers le haut.

Sur la figure 5, on voit aussi le support mécanique 54 (respectivement 56) sur lequel on a collé le substrat 52 (respectivement 46). Les substrats 46 et 52 sont transparents à la lumière de longueur d'onde 950 nm.

La figure 6 illustre schématiquement le cas où les fibres 44 sont suffisamment courtes pour permettre la formation d'un système optique monobloc où les supports 54 et 56 sont fixés l'un à l'autre par une couche de colle 58.

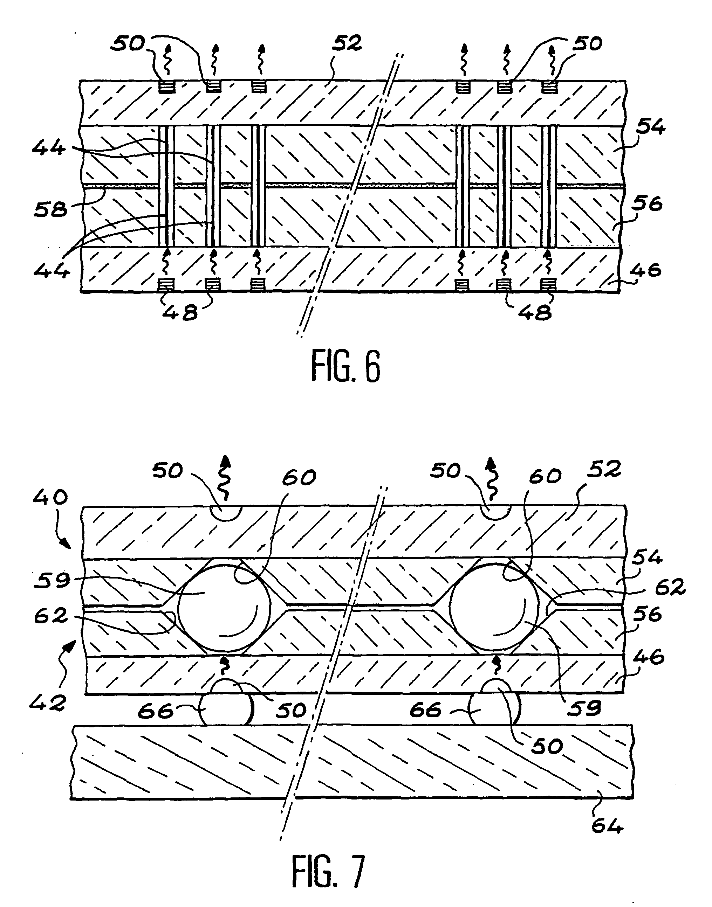

Une variante de la figure 6 est schématiquement illustrée par la figure 7. Les fibres 44 y sont remplacées par des lentilles sphériques de collimation 59.

Dans l'exemple de la figure 7, les trous 60 (respectivement 62) du support mécanique 54 (respectivement 56) ont une forme conique. La partie inférieure de chaque lentille 59 est logée dans l'un des trous 62 et sa partie supérieure est logée dans l'un des trous 60.

Chaque lentille assure ainsi la transmission et la collimation du flux lumineux émis par l'un des VCSEL 48 vers l'un des lasers 50.

Les trous coniques 60 et 62 peuvent être formés par gravure chimique. Grâce aux lentilles sphériques 59, ces trous ou empreintes permettent d'auto-aligner les plaques constituant les supports 54 et 56, la face arrière de l'un étant contre la face arrière de l'autre.

Le système optique formé par les dispositifs 40 et 42 de la figure 7 peut être monté sur un circuit de commande 64 par l'intermédiaire de microbilles de brasure 66.

## Revendications

1. Procédé d'alignement passif d'un composant optoélectronique (2) et d'au moins un guide de lumière (18), le composant optoélectronique comprenant un substrat (4) et, sur ce substrat, au moins une zone active (8) destinée à émettre ou recevoir cette lumière et devant être optiquement couplée au guide de lumière, procédé dans lequel:
- on utilise un support (12) ayant des première et deuxième faces opposées,
- on forme au moins un trou (14) dans le support, à partir de la première face de ce support, ce trou étant prévu pour recevoir une extrémité du guide de lumière,
- on fixe le substrat à la deuxième face du support, on forme ensuite la zone active sur le substrat en regard du trou, et
- on place l'extrémité du guide de lumière dans le trou,
ce procédé étant **caractérisé en ce que** on forme en outre des premiers repères (24) sur le support (12), on fixe le substrat (4) à la deuxième face de ce support et l'on forme ensuite, par une technique de photolithographie, la zone active (8) du composant optoélectronique sur ce substrat, en regard du trou (14), et l'on utilise, pour la photolithographie, un masque (26) comprenant au moins un motif (32), ce motif correspondant à la zone active à former, et comprenant aussi des deuxièmes motifs (34) tels qu'en alignant ces deuxièmes motifs et les premiers repères le motif (32) du masque soit aligné avec le trou (14) du support, et l'on place ce masque au dessus du substrat en alignant les deuxièmes motifs avec les premiers repères.

2. Procédé selon la revendication 1, dans lequel le support (12) est fait d'un matériau choisi parmi le silicium et le corindon.

3. Procédé selon l'une quelconque des revendications 1 et 2, dans lequel le trou (14) du support est un trou borgne et le support est transparent à la lumière destinée à être reçue ou émise par la zone active du composant optoélectronique.

4. Procédé selon l'une quelconque des revendications 1 et 2, dans lequel le trou (14) du support débouche sur la deuxième face de ce support.

5. Procédé selon la revendication 4, dans lequel, avant la fixation du substrat (12) au support (4), on dispose une lentille (38) en l'extrémité du trou qui débouche sur la deuxième face du support.

6. Procédé selon l'une quelconque des revendications 1 à 5, dans lequel le guide de lumière est une fibre optique (18).

7. Système optique comprenant des premier et deuxième dispositifs (40, 42) chacun de ces derniers étant un dispositif comprenant un composant optoélectronique, le composant optoélectronique comprenant un substrat et, sur ce substrat, au moins une zone active destinée à émettre ou recevoir cette lumière et devant être optiquement couplée au guide de lumière, ce dispositif comprenant aussi un support ayant des première et deuxième faces opposées, au moins un trou étant formé dans le support, à partir de la première face de ce support, ce trou étant prévu pour recevoir une extrémité du guide de lumière, le substrat étant fixé à la deuxième face du support, la zone active étant formée en regard du trou, le système comprenant aussi au moins un guide de lumière (44, 59) ayant des première et deuxième extrémités, la première extrémité étant placée dans le trou du support du premier dispositif et la deuxième extrémité étant placée dans le trou du support du deuxième dispositif.

8. Système selon la revendication 8, dans lequel le guide de lumière (44) est suffisamment court pour permettre aux supports (54, 56) appartenant respectivement aux premier et deuxième dispositifs d'être sensiblement en contact l'un avec l'autre.

9. Système selon l'une quelconque des revendications 8 et 9, dans lequel le guide de lumière est une fibre optique (44).

10. Système selon l'une quelconque des revendications 8 et 9, dans lequel le guide de lumière est une lentille (59).

## Claims

1. Method for passive alignment of an optoelectronic component (2) and at least one light guide (18), the optoelectronic component comprising a substrate (4), and, at least one active area (8) on this substrate that will emit or receive this light and being optically coupled to the light guide, wherein:
- a support (12) is used with opposite first and second faces,
- at least one hole (14) is formed in the support, starting from the first face of this support, this hole being designed to receive one end of the light guide,
- the substrate is fixed to the second face of the support, said active area is then formed on the substrate facing the hole, and
- the end of the light guide is placed in the hole, said method being **characterized in that** first marks (24) are also formed on the support (12), the substrate (4) is fixed to the second face of this support and a photolithography technique is then used to form the active area (8) of the optoelectronic component on this substrate, facing the hole (14), and photolithography is carried out using a mask (26) comprising at least one pattern (32), this pattern corresponding to the active area to be formed, and also comprising second patterns (34) such that when these second patterns and the first marks are aligned, the pattern (32) of the mask is aligned with the hole (14) of the support, and this mask is placed above the substrate by aligning the second patterns with the first marks.

2. Method according to claim 1, wherein the support (12) is made of a material chosen from among silicon and corundum.

3. Method according to either of claims 1 and 2, wherein the hole (14) in the support is a non-through hole and the support is transparent to the light that will be received or emitted by the active area of the optoelectronic component.

4. Method according to either of claims 1 and 2, wherein the support hole (14) opens up onto the second face of this support.

5. Method according to claim 4, wherein before the substrate (12) is fixed to the support (4), a lens (38) is placed on the end of the hole opening up on the second face of the support.

6. Method according to any one of claims 1 to 5, wherein the light guide is an optical fibre (18).

7. Optical system comprising first and second devices (40, 42), each of which being a device comprising an optoelectronic component and at least one light guide, the optoelectronic component comprising a substrate and at least one active area being formed on this substrate designed to emit or receive this light and which will be optically coupled to the light guide, said device also comprising a support with opposite first and second faces, at least one hole being formed in the support, starting from the first face of this support, this hole being designed to receive one end of the light guide, the substrate being fixed to the second face of the support, the active area being formed facing the hole, said system also comprising at least one light guide (44, 59) with first and second ends, the first end being placed in the hole of the support of the first device and the second end being placed in the hole of the support of the second device.

8. System according to claim 7, wherein the light guide (44) is sufficiently short to enable supports (54, 56) belonging to the first and second devices respectively to substantially be in contact with each other.

9. System according to either of claims 7 and 8, in which the light guide is an optical fibre (44).

10. System according to either of claims 8 and 9, wherein the light guide is a lens (59).

## Patentansprüche

1. Verfahren zur passiven Ausrichtung eines optoelektronischen Bauteils (2) und wenigstens eines Lichtwellenleiters (18), wobei das optoelektronische Bauteil ein Substrat (4) und wenigstens eine aktive Zone (8) auf diesem Substrat umfasst, die dazu dient, dieses Licht auszusenden oder zu empfangen und die mit dem Lichtleiter optisch gekoppelt sein muss, bei dem:
- man einen Träger (12) mit entgegengesetzten Flächen, einer ersten und einer zweiten, verwendet,
- man in dem Träger wenigstens ein Loch (14) bildet, ausgehend von der ersten Seite dieses Trägers, wobei dieses Loch dazu dient, ein Ende des Lichtwellenleiters aufzunehmen,
- man das Substrat an der zweiten Fläche des Trägers befestigt, anschließend in dem Substrat dem Loch gegenüber die aktive Zone bildet und das Ende des Lichtwellenleiters in dem Loch anbringt,
wobei dieses Verfahren **dadurch gekennzeichnet ist, dass** man in dem Träger (12) außerdem erste Bezugseinrichtungen (24) bildet, das Substrat (4) an der zweiten Fläche dieses Trägers befestigt und anschließend mittels einer Photolithographietechnik die aktive Zone (8) des optoelektronischen Bauteils auf diesem Substrat bildet, dem Loch (14) gegenüber, und man für die Photolithographie eine Maske (26) benutzt, die wenigstens ein Muster (32) umfasst, wobei dieses Muster der zu bildenden aktiven Zone entspricht, und auch derartige zweite Muster (34) umfasst, dass, wenn man diese zweiten Muster auf die ersten Bezugseinrichtungen ausrichtet, das Muster (32) der Maske auf das Loch (14) des Trägers ausgerichtet ist, und man diese Maske Ober dem Substrat anordnet, indem man die zweiten Muster auf die ersten Bezugseinrichtungen ausrichtet.

2. Verfahren nach Anspruch 1, bei dem der Träger (12) aus einem zwischen Silicium und Korund ausgewählten Material ist.

3. Verfahren nach einem der Ansprüche 1 und 2, bei dem das Loch (14) des Trägers ein Grundloch ist und der Träger durchlässig ist für das Licht, das durch die aktive Zone des optoelektronischen Bauteils empfangen oder ausgesendet wird.

4. Verfahren nach einem der Ansprüche 1 und 2, bei dem das Loch (14) des Trägers in der zweiten Fläche dieses Trägers mündet.

5. Verfahren nach Anspruch 4, bei dem man vor der Befestigung des Substrats (12) an dem Träger (4) am Ende des Lochs, das in der zweiten Fläche des Trägers mündet, eine Linse (38) anbringt.

6. Verfahren nach einem der Ansprüche 1 bis 5, bei dem der Lichtwellenleiter eine optische Faser (18) ist.

7. Optisches System mit einer ersten und einer zweiten Vorrichtung (40, 42), von denen jede eine ein optoelektronisches Bauteil umfassende Vorrichtung ist, wobei das optoelektronische Bauteil ein Substrat und wenigstens eine aktive Zone auf diesem Substrat umfasst, die dazu dient, dieses Licht auszusenden oder zu empfangen und die mit dem Lichtleiter optisch gekoppelt sein muss, und diese Vorrichtung auch einen Träger mit entgegengesetzten Flächen, einer ersten und zweiten, und ein in dem Träger ausgebildetes Loch umfasst, ausgehend von der ersten Fläche dieses Trägers, wobei dieses Loch dazu dient, ein Ende des Lichtwellenleiters aufzunehmen, das Substrat an der zweiten Fläche des Trägers befestigt ist, die aktive Zone dem Loch gegenüber ausgebildet ist und das System dabei wenigstens einen Lichtwellenleiter (44, 59) mit einem ersten und einem zweiten Ende umfasst, wobei das erste Ende in dem Loch des Trägers der ersten Vorrichtung angeordnet ist und das zweite Ende in dem Loch des Trägers der zweiten Vorrichtung angeordnet ist

8. System nach Anspruch 8, bei dem der Lichtwellenleiter (44) so kurz ist, das die beiden Trägem (54, 56), die jeweils zu der ersten und der zweiten Vorrichtung gehören, sich im Wesentlichen berühren.

9. System nach einem der Ansprüche 8 und9, bei dem der Lichtwellenleiter eine optische Faser (44) ist.

10. System nach einem der Ansprüche 8 und 9, bei dem der Lichtwellenleiter eine Linse (59) ist
